# EUROPEAN PATENT APPLICATION

(11) **EP 2 107 466 A1**
(43) Date of publication of application: **07.10.2009**
(21) Application number: 08153752.4
(22) Date of filing: 31.03.2008
(51) Int. Cl.: G06F 11/26

(54) **Electronic device for emulating other electronic devices and method for operating an electronic device**

(71) Applicant: Sony Corporation, Tokyo (JP)
(72) Inventor: Roth, Daniel, 70327, Stuttgart (DE)
(74) Representative: Körber, Martin Hans

(57) **Abstract**

The present invention relates to an electronic device for emulating other electronic devices comprising an interface (6) for enabling communication within a network (11), an embedded emulation system (10) for emulating at least a second electronic device (12), said embedded emulation system (10) comprising transmission emulation means (9) for creating messages to be sent via the interface (6), said messages having as sender address the address of the second electronic device (12).

The present invention further relates to a method for operating an electronic device.

## Description

The present invention relates to an electronic device for emulating other electronic devices and to a method for operating an electronic device. Specifically, the present invention relates to the field of sending and receiving messages within a network.

In general, electronic devices are used in a wide field of applications. Such electronic devices may for example be a personal computer, a television, a video-recorder, a DVD or HDD recorder, facsimile devices, digital cameras, mobile terminals for wireless communication or other electronic consumer devices. An important task in developing electronic devices is to enable the devices to be connected to a network or to other electronic devices and to communicate with each other.

When connecting electronic devices either directly or via a network there can arise problems due to incompatibility problems. For example the different electronic devices do not have the same version of the used communication standards or some functions do not work properly. It is therefore required to adopt test procedures and error diagnosis procedures which allow to recognise problems and remove the problems prior to delivering the electronic devices to the customer or to remove errors which arise during use of the electronic devices by the customer.

It is therefore the object of the present invention to provide an electronic device as well as a method for operating an electronic device enabling a simple and consumer-friendly test procedure and error diagnosis.

This object is solved by an electronic device for emulating other electronic devices according to claim 1 and by a method for operating an electronic device according to claim 15.

The present invention relates to an electronic device for emulating other electronic devices comprising an interface for enabling communication within a network, an embedded emulation system for emulating at least a second electronic device, said embedded emulation system comprising transmission emulation means for creating messages to be sent via the interface, said messages having as sender address the address of the second electronic device.

Preferably, the transmission emulation means creates a message to be sent to a third electronic device for requesting an answer from the third electronic device.

Advantageously, the transmission emulation means creates a message in response to a polling message thereby reporting on an occupied address within the network.

The embedded emulation system in a preferred embodiment further comprises a reception emulation means for accepting messages received via the interface having as recipient address the address of the second electronic device.

Preferably, the embedded emulation system acknowledges reception of a message having as recipient address the address of the second electronic device.

The embedded emulation system can be adapted to emulate two or more electronic devices.

The embedded emulation system can be adapted to disable transmission of messages via the interface having as sender address the address of the electronic device. The embedded emulation system can further be adapted to disable reception of messages via the interface having as recipient address the address of the electronic device.

Alternatively, the embedded emulation system is adapted to emulate at least the second electronic device in addition to the normal functionality of the electronic device.

Preferably, the electronic device according further comprises a storage for storing data related to the second electronic device, and wherein the transmission emulation means is adapted to create messages having as sender address the address of the second electronic device based on the stored data.

Advantageously, the electronic device is adapted to send at least a part of all possible messages to the second electronic device, to store the answers and/or failure messages received from the second electronic device in response to the sent messages in the storage, and to use the stored answers and/or failure messages for creating messages having as sender address the address of the second electronic device.

Further, preferably, the electronic is adapted to request characteristics from the second electronic device, to store the characteristics in the storage, and to use the characteristics for creating messages having as sender address the address of the second electronic device.

Advantageously, the electronic device is adapted to receive a readily prepared data set comprising messages transmitted to and/or from the second electronic device, to store the readily prepared data set in the storage and to use the stored data set for creating messages having as sender address the address of the second electronic device.

In a preferred embodiment the electronic device further comprises a listening unit for monitoring the messages transmitted to and/or from the second electronic, wherein the monitored messages are stored in the storage and wherein the stored messages are used for creating messages having as sender address the address of the second electronic device.

The present invention further relates to a method for operating an electronic device comprising the steps of providing an interface for enabling communication within a network, emulating at least a second electronic device, wherein the step of emulating comprises creating messages to be sent via the interface, said messages having as sender address the address of the second electronic device.

The present invention will now be explained in more detail in the following description of preferred embodiments in relation to the enclosed drawings in which

Figure 1 shows a schematic block diagram of an electronic device according to the present invention,

Figure 2 shows a network comprising the electronic device according to the present invention,

Figure 3 is a flow-chart showing the process steps of a method according to a first embodiment of the present invention,

Figure 4 is a flow-chart showing the process steps of a method according to a second embodiment of the present invention,

Figure 5 is a flow-chart showing the process steps of a method according to a third embodiment of the present invention,

Figure 6 is a flow-chart showing the process steps of a method according to a fourth embodiment of the present invention, and

Figure 7 is a flow-chart showing the process steps of a method according to a fifth embodiment of the present invention.

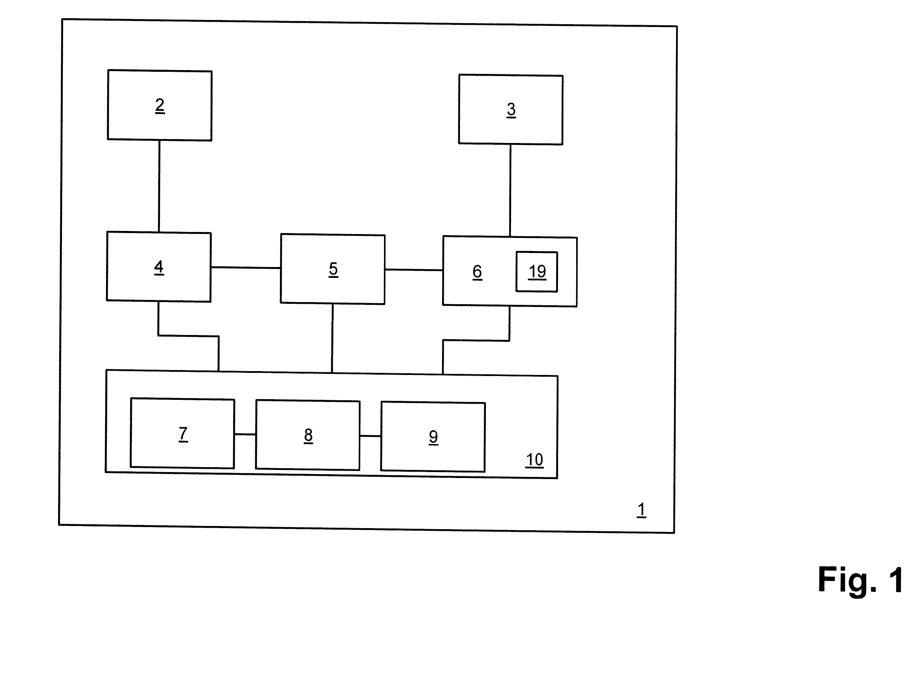

Figure 1 is a schematic block diagram showing the elements of an electronic device 1 according to the present invention. The electronic device 1 according to the present invention is an electronic consumer device being provided for use by a consumer. The electronic device 1 can be a personal computer, a television, a video-recorder, a DVD or HDD recorder, facsimile devices, digital cameras, mobile terminals for wireless communication or other electronic consumer devices.

The electronic device 1 comprises an input means 2 for enabling input of data and/or information by a user. The input means 2 may be a keyboard, a mouse, a touchpad, recognition of speech, an interface for receiving data input over a remote controller, for example an infrared interface, or any other interface enabling the user to input data and/or information or to select application programs via a wireless or wired connection. In addition, the electronic device 1 comprises an output means 3 for outputting data and/or information to a user. The output means 3 may be a display, light emitting diodes (LED), a loudspeaker or any other graphical user interface adapted to output data and/or information to the user.

In a specific embodiment the output means 3 may be or comprise a wired or wireless connection to a remote device enabling to transmit data and/or information to said remote device and likewise, the input means 2 may be or comprise a wired or wireless connection to said remote device enabling the reception of data and/or information. In this case, the functionalities of transmitting and receiving can also be combined in one single remote transmitting means (not shown in the figures). This allows other persons to remotely control the electronic device 1 and all its functionalities.

A storage 4 is further provided for temporally or permanently storing data, information, programs, applications and the like. The storage 4 hereby may be divided into different storage spaces each providing different types of memory, i.e. a random access memory RAM, a flash memory or other types.

The input means 2, the output means 3 and the storage 4 are all connected to and in data communication with a controller 5. The controller 5 hereby controls and supervises the transmission and processing of data and/or information within the electronic device 1. The controller 5 further supervises the operation of the electronic device 1. The controller 5 can be composed of a single or of a plurality of hardware and/or software components. Specifically, the controller according to the present invention may comprise a multi processor architecture. Additionally, the other components within the electronic device 1 can be separate components or their functionalities together with the functionalities of the controller 5 can be implemented in a central processing unit.

In addition the electronic device 1 comprises an interface 6 enabling a communication of the electronic device 1 within a network 11 with at least one further electronic device. The interface 6 can be adapted to enable either a wireless or wired connection within the network 11. The interface 6 is also connected to and in data communication with the controller 5.

The electronic device 1 via the interface 6 is connected to several further electronic devices, whereby all the devices connected to the network 11 have interfaces enabling communication within the network 11. Specifically, thereby a bus system is formed enabling transmission and reception of messages. According to a preferred embodiment of the present invention the communication hereby is accomplished according to the consumer electronics control (CEC) standard but is not limited to this type of communication.

Optionally, the electronic device 1 may comprise a listening unit 19 which is adapted to monitor the whole traffic transmitted within the network without participating in the transmitted traffic, i.e. without sending or receiving messages itself. With this listening unit 19 the electronic device 1 can monitor and store all messages transmitted within the network even if those messages are not intended for or sent from the electronic device 1 itself. The listening unit 19 can be implemented in the interface 6 as hardware or software component and is adapted to transmit the monitored traffic to any further components, e.g. the controller 5, for further processing the monitored network traffic.

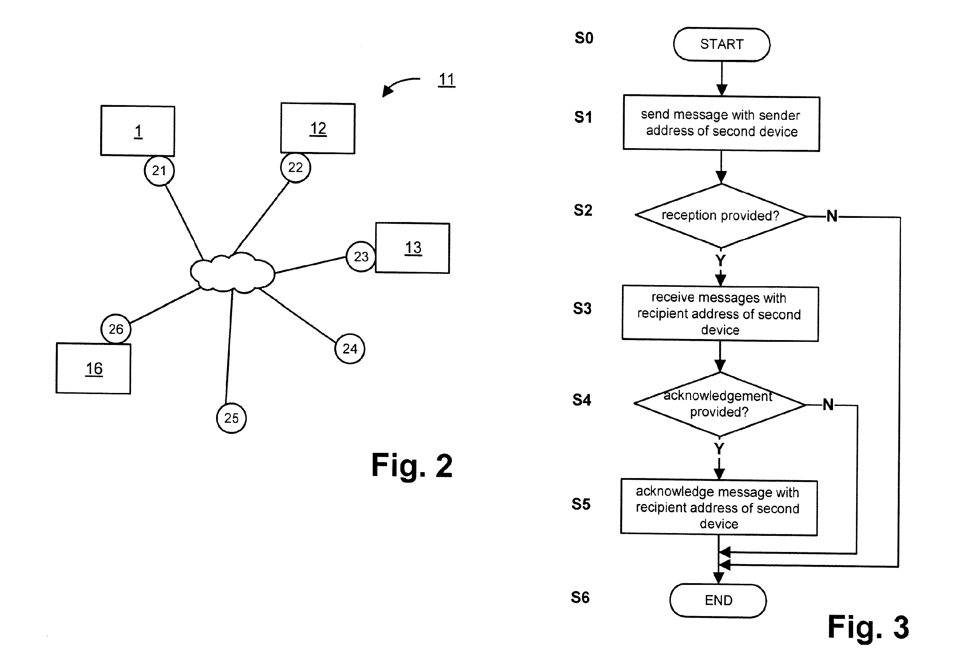

Figure 2 shows a network 11 connecting several electronic devices. Specifically, the electronic device 1 according to the present invention is connected to the network 11 and further a second electronic device 12, a third electronic device 13 and a fourth electronic device 16 are connected to the network 11.

Hereby within the network 11 several logical addresses 21, 22, 23, 24, 25, 26 are provided which can be occupied by an electronic device. As shown in figure 2 the electronic device 1 occupies the address 21, the second electronic device 12 occupies the address 22, the third electronic device 13 occupies the address 23 and the fourth electronic device 16 occupies the address 26. The addresses 24 and 25 are not occupied by any electronic device and therefore free addresses. In Figure 2 the logical addresses are denoted with 21, 22, 23, 24, 25 and 26 but those addresses are intended to exemplary represent any type of logical address and are not intended to limit the present invention to networks comprising logical addresses from 21 to 26 or to networks comprising only six logical addresses. Specifically, the present invention also comprises a consumer electronics control CEC network having 16 logical addresses being denoted with numbers from 0 to 15. Likewise, the present invention can also be adapted to an Ethernet network having IP addresses, to any other type of network with corresponding addresses within the network or to a network comprising a mixture of different communication standards.

In case that the electronic devices connected to the network 11 are sending messages then each electronic device will send together with the messages his own address 21 to 26 as sender address. Likewise, each electronic device is also adapted to either broadcast messages within the network 11, in which case each electronic device connected to the network 11 will receive the message, or to send a message with a specific recipient address, whereby then only the electronic device occupying the specific recipient address will receive and/or acknowledge the message, whereby the steps of sending, receiving and acknowledging will be explained in detail later on.

The electronic device 1 according to the present invention as shown in figure 1 additionally comprises an embedded emulation system 10 which enables the electronic device 1 to emulate a further device within the network 11.

Hereby in the present description the electronic device which is emulated by the electronic device 1 will be called "second electronic device". Nevertheless it is to be noted that the electronic device 1 according to the present invention is adapted to emulate any electronic device connected or connectable to the network 11 and only for simplifying the explanation in the following it is assumed that the emulated electronic device is the second electronic device 12. Further, the electronic device 1 according to the present invention is adapted to emulate the second electronic device 12 even in case that the second electronic device 12 is presently not connected to the network 11. The case that the second electronic device 12 is not connected to the network 11 is not shown in the figures but is expressly included in the present invention. On the other hand the electronic device 1 is also adapted to emulate the second electronic device 12 even in case the second electronic device 12 is connected to the network 11.

Hereby, the term "emulation" encompasses all actions and functionalities of the electronic device 1 which correspond to the behaviour of an thereby emulated second electronic device. This comprises sending messages with the address of the second electronic and/or automatically responding to messages in the same way the second electronic device does. Additionally or alternatively, the electronic device 1 can send messages corresponding to the behaviour of the second electronic device, whereby the messages are triggered by user actions, e.g. by pressing a specific button or inputting specific commands using a remote controller or a graphical user interface of the electronic device 1. A further possibility is, that all emulation functions can also be triggered by a remote device.

Referring again to figure 1, with the embedded emulation system 10 it is possible to emulate the behaviour of the second electronic device 12, i.e. to send and receive messages thereby acting as second electronic device 12 and imitating the behaviour of the second electronic device 12.

The embedded emulation system 10 therefore specifically comprises a transmission emulation means 9 which is adapted to create messages which are intended to be sent via the interface 6 to the network 11, and whereby said messages comprise as sender address the address 22 of the second electronic device 12. In case that the electronic device 1 sends such a message created by the transmission emulation means 9, the other electronic devices within the network 11 will receive the address and read as sender address the address 22 of the second electronic device 12.

Likewise the embedded emulation system comprises a reception emulation means 7 which is adapted to receive messages via the interface 6 which are intended for the second electronic device 12 and therefore comprise the address 22 of the second electronic device 12 as recipient address.

The embedded emulation system 10 further comprises a system controller 8 which is adapted to supervise the transmission and processing of data within the embedded emulation system 10. Alternatively, the system controller 8 can also be omitted and the functions of the system controller 8 can be overtaken by the controller 5.

The embedded emulation system 10, the reception emulation means 7, the system controller 8 and the transmission emulation means 9 can either be separate hardware components or can represent hardware or software components adapted to carry out the process steps and specific functions for emulating the second electronic device 12. Specifically, according to the present invention the embedded emulation system 10 is embedded in the system of the electronic device 1 and therefore no external separate components are needed. The embedded emulation system 10 can either already be provided within the electronic device 1 when produced and delivered to the costumer or the embedded emulation system can be simply added to the electronic device as additional application, which can for example be input via the input means 2 over a remote PC or which can be loaded from a memory stick.

Since the functionality of emulating other devices is provided as an embedded system within a consumer electronic device, it is very consumer-friendly since no additional devices have to be used or connected to the network 11.

The electronic device 1 can either provide its own normal functionality in addition to emulating other devices or can hide its own normal functionality and only emulate other devices. For hiding its own functionality the embedded emulation system 10 or the controller 5 can disable the functionality of transmitting messages or can ignore messages having as sender address the address 21 of the electronic device 1. Likewise, the embedded emulation system 10 or the controller 5 can disable the functionality of receiving and/or acknowledging messages or can ignore messages having as recipient address the address 21 of the electronic device 1 Hereby, either the transmission functionality, the reception functionality of both functionalities can be disabled. Specifically, the electronic device 1 may still receive messages having as recipient address the address 21 of the electronic device 1 but does not react on such messages. In the case of a communication within the network according to the consumer electronics control CEC standard, the electronic device may simply switch off its own CEC functionality.
In the following, different applications and embodiments of the present invention will be explained in detail. A first application is explained with reference to figure 3. The process starts in S0 for example with activating the embedded emulation system 10 or during the continuous process of the electronic device 1.

In the first step S 1 the transmission emulation means creates a message having as sender address the address 22 of the second electronic device 12. Hereby it is again to be noted, that the second electronic device 12 can be emulated independent of the second electronic device 12 being present at the address 22 or not. The message with the sender address 22 of the second electronic device 12 is sent via the interface 6 to the other electronic devices of the network 11.

In the next step S2 the system controller 8 of the embedded emulation system 10 checks whether a reception of an answer in response to the previously sent message is provided. In case that a reception is provided then in the next step S3 the reception emulation means will receive via the interface 6 message with the recipient address 22 of the second electronic device 12. That means the reception emulation means 7 will check the bus traffic and receive those messages intended for the second electronic device 12 which was emulated by the embedded emulation system 10.

In the next step S4 the system controller 8 checks whether an acknowledgement of the received message is provided, i.e. a feedback to one or more electronic devices within the network that the message having as recipient address the address 22 of the second electronic device 12 has been received. If an acknowledgement is provided then in the next S5 the transmission emulation means 9 will again send an acknowledge message having as sender address the address 22 of the second electronic device 12. In some cases dependent on the used communication standard and/or dependent on the type of message, an acknowledgement may be mandatory for enabling a proper communication. In this cases as test procedure an acknowledgement may be omitted in order to test the corresponding errors and/or failure messages arising within the network.

Otherwise if in the steps S2 or S4 it is decided that either a reception is not provided or that an acknowledgement is not provided the process in any case ends in step S6.

The above method with reference to figure 3 has been described in a very general way. Depending on the used communication standard the detailed functionalities and/or steps may differ from above description. Specifically, in some cases the step of receiving a message and of acknowledging a message may be the same or linked to each other, e.g. only in case that the reception of the beginning of a message is acknowledged, then also the rest of the messages can be received. The above general description is therefore not intended to limit the present invention but only to exemplary describe the method steps in general.

As an example for a possible communication standard to which the present invention can be applied in the following the above steps will be explained in relation to the consumer electronics control CEC communication standard.

A message according to the CEC standard usually comprises a header, an end of message EOM bit and an acknowledgement bit ACK. The header comprises a start bit, a header block comprising the source and destination address, i.e. the sender and recipient address, and optionally an opcode and operands specific to the opcode.

The sender of the messages always sets the acknowledgement bit ACK to "1". In case of a messages having a specific recipient address, the device connected to the recipient address after having read its own logical address as recipient address will set the ACK to "0". All other devices will not assert the ACK to "0". The sender device when reading the "0" will know that the transmission of the messages to the recipient device has been successful. Otherwise, in case of a broadcast message, i.e. in case of a message being sent to all electronic devices within the network 11, the AKC serves for indicating the rejection of the message by a specific electronic device. If an electronic device wants to reject the message, then it will set the ACK to "0", otherwise it will not assert the ACK. In case the sender electronic device reads messages comprising the ACK set to "0" it will know that one or more electronic devices have rejected the message.

Hereby, two scenarios are possible. The ACK can be provided at the end of the message. This allows the electronic device 1 when emulating the second electronic device 12 to only receive the message according to step S3 without acknowledgement or to additionally acknowledge the reception of the message in step S5 by setting the ACK to "1" or "0" depending on whether the message was broadcast or not. The other possibility is to provide the ACK in the header of the message. In this case the recipient will only receive a first part of the message and only by acknowledging the reception of the first part the recipient device will also receive the rest of the message. In this case, the steps S3 and S5 are linked with each other and the step of receiving the message should be understood as comprising either only the step of receiving the first part of the message before acknowledging or of comprising both steps, i.e. the step of receiving the first part of the message before acknowledging and the step of receiving the second part of the message after acknowledging.

In another possible implementation, the CEC messages comprises several ACK provided between different parts of the message. The whole message thereby can only be received in case that all ACK are sequentially acknowledged. In case of a broadcast message for properly receiving the complete message all ACK sequentially are not acknowledged. In this case the step of receiving the message comprises receiving at least a part of the message, i.e. it is possible to only receive a part of the message and then to stop the reception by not further acknowledging.

With the previously described method the electronic device I is enabled to emulate the second electronic device 12. A possible detailed application will be explained in the following. As shown in figure 2 the second electronic device is occupying the address 22 and the third electronic device 13 is occupying the address 23. There may arise the necessity that the third electronic device 13 sends a message to the second electronic device 12. With the present invention it is now possible to trigger such a message. In this case the transmission emulation means 9 of the electronic device 1 creates a message requesting an answer from the third electronic device 13. The transmission emulation means 9 adds to this message as sender address the address 22 of the second electronic device 12. The created message is then sent via the interface 6.

The third electronic device 13 will receive the message and believe that the message was sent from the second electronic device 12 occupying the address 22. Since the message requested an answer from the third electronic device 13 to the sender of the message, and since the third electronic device 13 regards as sender the second electronic device 12, the third electronic device 13 will send an answer message to the second electronic device 12 by adding the recipient address 22 of the second electronic device 12.

Thereby it is possible to partly emulate the second electronic device, i.e. by only emulating the transmission of messages of the second electronic device 12. Alternatively it is possible that the electronic device 1 emulates the whole behaviour of the second electronic device and also receives the message intended for the address 22 of the second electronic device 12.

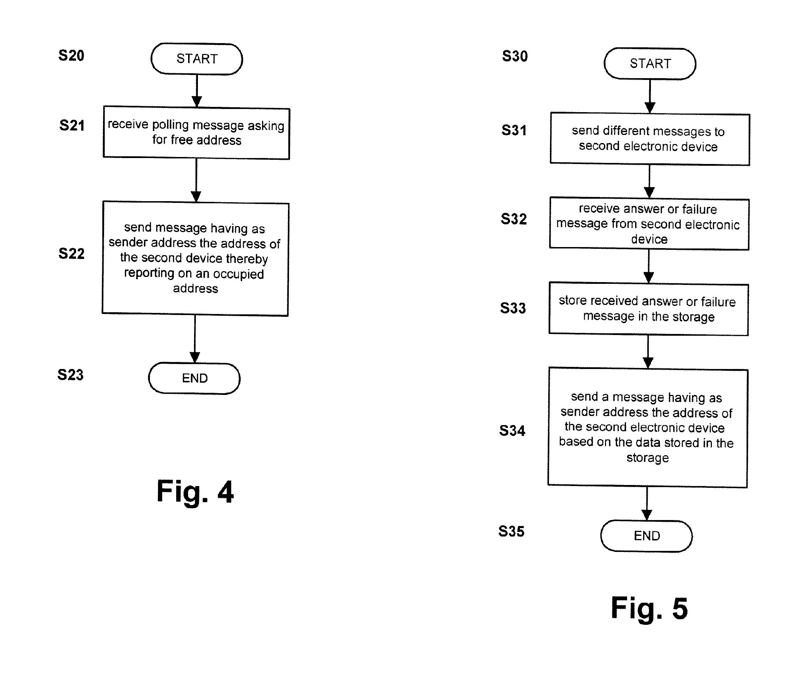

A further application is shown in figure 4. The process starts in step S20 for example with a newly connected device. A newly connected device will send polling messages in order to know which addresses are free in order to know which address can be occupied. In case the necessity arises that a newly connected device should occupy a specific address, the electronic device 1 according to the present invention is adapted to emulate electronic devices within the network which are not physically present. The electronic device 1 thereby creates the impression for the newly connected device that some addresses are occupied, so that the newly connected device will not occupy those addresses and occupy another free address.

Here fore in step S21 the electronic device 1 will receive polling messages from the newly connected device asking for free addresses. If for example a device is newly connected to the network as shown in figure 11 and it is intended that the newly connected device should occupy the address 25, then the electronic device 1 when answering the polling messages will send a message having as sender address the address 24 thereby reporting that the address 24 is occupied. The newly connected device then will automatically occupy the address 25.

In case of a CEC network, the newly connected device will send one polling message at a time and wait for response. In case that the newly connected device receives a response reporting on a occupied address, it will send the next polling message to the next logical address. Hereby, in a CEC network, the addresses are polled by every newly connected device according to a predefined order. The present electronic device 1 therefore for each polling message exactly knows which address will be polled and can therefore easily create response messages reporting on an occupied address until the newly connected devices polls the logical address which it is supposed to take.

The process ends in step S23, i.e. the handling of one specific polling message ends and the electronic device 1 is in a continuous process enabling further handling of polling messages or other functionalities.

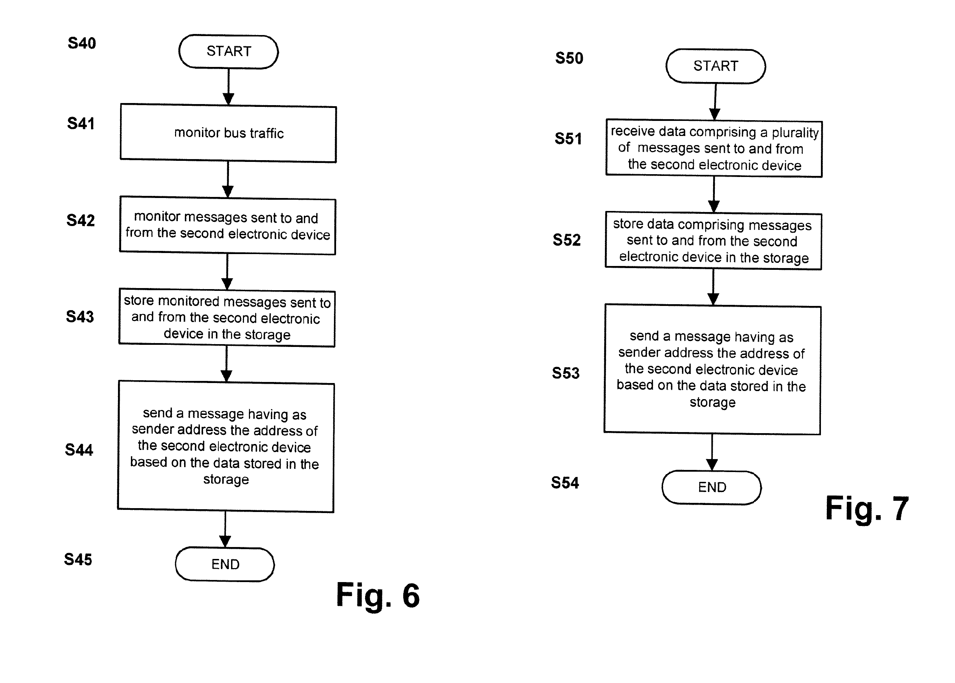

A further application for enabling a better emulation of connected devices is to learn the behaviour of the devices prior to emulating them. This feature of smart sniffing and its corresponding applications is shown in figures 5 and 6. With reference to figure 5 a first process is explained. The process starts in step S30. In the next step S31 the electronic device 1 will send different messages to the second electronic device 12. The electronic device 1 may send a specific selection of all possible messages to the second electronic device 12 or may send all possible messages and opcodes to the second electronic device 12. In the next step S23 the electronic device will receive either answer messages or failure messages, e.g. feature abort, in case that the respective message or application is not supported by the electronic device 12, or will receive no answer at all. Thereby, the electronic device 1 can learn the behaviour of the second electronic device 12 and can additionally check which features, specifically which CEC features, are supported by the second electronic device.

The electronic device 1 can also request characteristics from the second electronic device 12, such as device number, vendor, language, settings and so on.

In the next step S33 the electronic device 1 will store the received answer or failure messages in the storage 4 and will also store information in case that no answer at all has been received. Optionally, in case that the electronic device 1 has requested characteristics from the second electronic device 12, these will also be stored in the storage 4.

In case that the electronic device 1 now needs to emulate the second electronic device 12, the transmission emulation means 9 will create messages having as sender address the address 22 of the second electronic device 12 and comprising at least a part of the respective data stored in the storage 4. The stored data comprises messages sent from the second electronic device 12. The electronic device 1 can either take a whole message as stored in the storage 4 or can take only a part of the message stored in the storage 4 for creating a new message, e.g. the date within the message can be changed or the order within a sequence of messages can be adapted. In any case the newly created message comprises as sender address the address 22 of the second electronic device 12.

This possibility is specifically important in testing the compatibility of different electronic devices, for example of electronic devices having different producers.

A further possibility of emulating the second electronic device 12 is shown in Figure 6. This process can be accomplished in case that a listening unit 19 is provided within the electronic device 1. The process starts in step S40. In the next step S41 the listening unit 19 monitors the traffic within the network, i.e. monitors all messages transmitted within the network 11. Specifically, in step S42 the listening unit 19 monitors all messages transmitted from /to the second electronic device 12. In the next step S43 the monitored messages are stored in the storage 4. In case that the electronic device 1 now has to emulate the second electronic device 12 it can as previously described use the stored messages in the storage 4 for creating messages having a sender address the address 22 of the second electronic device 12. Since by the listening unit 19 the electronic device 12 was able to monitor and learn the behaviour of the second electronic device 12 the electronic device 1 can better emulate the second electronic device 12. This has the advantage, that all types of messages transmitted to and/or from the second electronic device 12 can be stored and that the stored data are not limited to those data received with the method according to figure 5.

A further possibility of emulating the second electronic device 12 will be explained with reference to figure 7. The process starts in step S50. In the next step S51 the electronic device 1 will receive data comprising a plurality of messages sent to and from the second electronic device 12. Additionally, the data may comprise characteristics of the second electronic device 12 and/or further information on the behaviour of the second electronic device 12. These data may for example be readily prepared data in the form of a table or a script which then can be stored directly in the storage 4 of the electronic device 1. The data can be delivered on a portable medium,
- e.g. a disc, a memory stick or the like, and manually or automatically stored in the storage 4 or can be transmitted via remote transmission means, e.g. the internet, to the electronic device. In the next step S52 the data are stored in the storage 4 and then used to create messages emulating the second electronic device 12 in step S53 as previously described. The process ends in step S54.

This possibility of storing readily prepared data in the storage 4 has several advantages. On one hand it is less time and resource consuming since the electronic device 1 does not have to collect all the messages transmitted from/to the second electronic device 12 and/or the characteristics itself by monitoring or sending test messages. This option is further important in cases where the second electronic device 12 is not present in the network 11. In this case the electronic device 1 cannot test or monitor the behaviour of the second electronic device and therefore needs to get the information on the behaviour of the second electronic device in another way.

It is to be noted that the above described possibilities according to figures 5 to 7 of better emulating the second electronic device 12 can also be mixed where appropriate.

Further, features or steps of any of the described different embodiments can also be implemented within another embodiment where appropriate.

According to the present invention it is further possible that the electronic device 1 stores messages received from other electronic devices. In order to enable a remote error diagnosis, the stored messages can be sent via the output means 3 to a remote PC or to any other remote device. With this connection a remote control of all functionalities of the electronic device 1 is possible. In case of malfunctions the electronic device 1 by emulating the behaviour of the other electronic devices is able to collect all failure messages within its storage. For remote error diagnosis the user therefore does not have to bring all electronic equipments to a service centre but only needs to connect the electronic device 1 to any network enabling a transmission of the stored messages to a remote service centre. This renders the system more comfortable and easy to handle for the customer.

The present invention offers a powerful and simple tool for test procedures, error diagnosis and the like, which is at the same time easy to implement and very user-friendly.

## Claims

1. Electronic device for emulating other electronic devices comprising an interface (6) for enabling communication within a network (11), an embedded emulation system (10) for emulating at least a second electronic device (12), said embedded emulation system (10) comprising transmission emulation means (9) for creating messages to be sent via the interface (6), said messages having as sender address the address of the second electronic device (12).

2. Electronic device according to claim 1,
wherein the transmission emulation means (9) creates a message to be sent to a third electronic device (13) for requesting an answer from the third electronic device (13).

3. Electronic device according to claim 1 or 2,
wherein the transmission emulation means (9) creates a message in response to a polling message thereby reporting on an occupied address (22) within the network (11).

4. Electronic device according to claim 1, 2 or 3,
wherein the embedded emulation system (10) further comprises a reception emulation means (7) for accepting messages received via the interface (6) having as recipient address the address (22) of the second electronic device (12).

5. Electronic device according to claim 4,
wherein the embedded emulation system (10) acknowledges reception of a message having as recipient address the address (22) of the second electronic device (12).

6. Electronic device according to any of the preceding claims,
wherein the embedded emulation system (10) is adapted to emulate two or more electronic devices.

7. Electronic device according to any of the preceding claims,
wherein the embedded emulation system (10) is adapted to disable transmission of messages via the interface (6) having as sender address the address (21) of the electronic device (1).

8. Electronic device according to any of claims 1 to 7,
wherein the embedded emulation system (10) is adapted to disable reception of messages via the interface (6) having as recipient address the address (21) of the electronic device (1).

9. Electronic device according to any of claims 1 to 6,
wherein the embedded emulation system (10) is adapted to emulate at least the second electronic device (12) in addition to the normal functionality of the electronic device (1).

10. Electronic device according to any of the preceding claims, further comprising a storage (4) for storing data related to the second electronic device (12), and
wherein the transmission emulation means (9) is adapted to create messages having as sender address the address (22) of the second electronic device (12) based on the stored data.

11. Electronic device according to claim 10, being adapted to send at least a part of all possible messages to the second electronic device (12), to store the answers and/or failure messages received from the second electronic device (12) in response to the sent messages in the storage (4), and to use the stored answers and/or failure messages for creating messages having as sender address the address (22) of the second electronic device (12).

12. Electronic device according to claim 10 or 11, being adapted to request characteristics from the second electronic device (12), to store the characteristics in the storage (4), and to use the characteristics for creating messages having as sender address the address (22) of the second electronic device (12).

13. Electronic device according to claim 10, 11 or 12, being adapted to receive a readily prepared data set comprising messages transmitted to and/or from the second electronic device (12), to store the readily prepared data set in the storage (4) and to use the stored data set for creating messages having as sender address the address (22) of the second electronic device (12).

14. Electronic device according to any of claim 10 to 13, further comprising a listening unit (19) for monitoring the messages transmitted to and/or from the second electronic (12),
wherein the monitored messages are stored in the storage (4) and
wherein the stored messages are used for creating messages having as sender address the address (22) of the second electronic device (12).

15. Method for operating an electronic device comprising the steps of providing an interface (6) for enabling communication within a network (11), emulating at least a second electronic device (12), wherein the step of emulating comprises creating messages to be sent via the interface (6), said messages having as sender address the address of the second electronic device (12).

16. Method according to claim 15, comprising the step of creating a message to be sent to a third electronic device (13) for requesting an answer from the third electronic device (13).

17. Method according to claim 15 or 16, comprising the step of creating a message in response to a polling message thereby reporting on an occupied address (22) within the network (11).

18. Method according to any of claims 15 to 17,
wherein said step of emulating further comprises accepting messages received via the interface (6) having as recipient address the address (22) of the second electronic device (12).

19. Method according to claim 18, comprising the step of acknowledging reception of a message having as recipient address the address (22) of the second electronic device (12).

20. Method according to any of the preceding claims, comprising the step of emulating two or more electronic devices.

21. Method according to any of the preceding claims, comprising the step of disabling transmission of messages via the interface (6) having as sender address the address (21) of the electronic device (1).

22. Method according to any of claims 15 to 21, comprising the step of disabling reception of messages via the interface (6) having as recipient address the address (21) of the electronic device (1).

23. Method according to any of claims 15 to 20, comprising the step of emulating at least the second electronic device (12) in addition to the normal functionality of the electronic device (1).

24. Method according to any of the preceding claims, comprising the steps of storing data related to the second electronic device (12), and creating messages having as sender address the address (22) of the second electronic device (12) based on the stored data.

25. Method according to claim 24, comprising the steps of sending at least a part of all possible messages to the second electronic device (12), storing the answers and/or failure messages received from the second electronic device (12) in response to the sent messages in the storage (4), and using the stored answers and/or failure messages for creating messages having as sender address the address (22) of the second electronic device (12).

26. Method according to claim 24 or 25, comprising the steps of requesting characteristics from the second electronic device (12), storing the characteristics in the storage (4), and using the characteristics for creating messages having as sender address the address (22) of the second electronic device (12).

27. Method according to claim 24, 25 or 26, comprising the steps of receiving a readily prepared data set comprising messages transmitted to and/or from the second electronic device (12), storing the readily prepared data set in the storage (4) and using the stored data set for creating messages having as sender address the address (22) of the second electronic device (12).

28. Method according to any of claim 24 to 27, further comprising the steps of monitoring the messages transmitted to and/or from the second electronic (12), storing the monitored messages in the storage (4) and using the stored messages for creating messages having as sender address the address (22) of the second electronic device (12).
